# FASCICULE DE BREVET EUROPEEN

(11) **EP 0 603 067 B1**
(45) Date de publication et mention de la délivrance du brevet: **05.03.1997**
(21) Numéro de dépôt: 93403033.9
(22) Date de dépôt: 15.12.1993
(51) Int. Cl.: F16H 25/22

(54) **Mécanisme de vis à rouleaux, notamment pour engin spatial, et actuateur linéaire comportant un tel mécanisme**
Gewinderollenmechanismus für ein Raumfahrzeug und Linearstellglied mit einem solchen Mechanismus
Roller-screw-mechanism for a spacecraft and linear actuator comprising such mechanism

(30) Priorité: 17.12.1992 FR 9215236
(43) Date de publication de la demande: 22.06.1994
(73) Titulaire: AEROSPATIALE Société Nationale Industrielle, 75781 Paris Cédex 16 (FR); TRANSROL, 73009 Chambéry (FR)
(72) Inventeur: Schoeffter, Jean-Pierre, F-06370 Mouans-Sartoux (FR); Camous, Jacques, F-06600 Antibes (FR)
(74) Mandataire: Poulin, Gérard

(56) Documents cités:
- EP-A- 0 275 504
- CH-A- 336 653
- DE-C- 857 304
- DE-C- 1 129 791
- FR-A- 1 477 775
- FR-A- 2 179 289
- FR-A- 2 206 825
- US-A- 2 690 682
- PATENT ABSTRACTS OF JAPAN vol. 013, no. 204 (M-825) 15 Mai 1989 & JP-A-01 026 059 (FUJI ELECTRIC)
- PATENT ABSTRACTS OF JAPAN vol. 7, no. 47 (M-196) 24 Février 1983 & JP-A-57 195 953 (WATANABE KIKAI)
- PATENT ABSTRACTS OF JAPAN vol. 14, no. 418 (M-1022) 10 Septembre 1990 & JP-A-02 163 550 (MITSUBISHI)

## Description

L'invention concerne principalement un mécanisme de vis à rouleaux conçu notamment pour être utilisé sur un engin spatial tel qu'un satellite, une station orbitale ou un véhicule spatial. L'invention concerne également l'application d'un tel mécanisme à la réalisation d'un actuateur linéaire.

Pour transformer un mouvement de rotation en un mouvement de translation linéaire, une première solution connue consiste à utiliser un mécanisme de vis à billes. Dans un tel mécanisme, une vis sans fin rotative est en prise sur un écrou lié à un organe mené quelconque, par l'intermédiaire de billes recirculées.

Comme l'illustre notamment le document DE-A-4 208 126, on connait des mécanismes de vis à billes perfectionnés dans lesquels, afin d'éviter l'apparition d'un jeu à l'intérieur du mécanisme, celui-ci comprend deux demi-écrous placés côte à côte et un système élastique est comprimé entre ces deux demi-écrous, afin de leur appliquer une précharge en extension.

Dans le document DE-C-857 304, un résultat comparable est obtenu au moyen d'un ressort hélicoïdal de compression qui prend appui sur un boîtier extérieur du mécanisme de vis à billes pour solliciter les demi-écrous l'un vers l'autre. Dans ce cas, les demi-écrous sont libres en rotation et en translation dans le boîtier.

Les performances des mécanismes de vis à billes sont satisfaisantes pour des applications courantes, mais insuffisantes pour des applications nécessitant de très hautes performances en ce qui concerne au moins l'un des paramètres suivants : précision, vitesse, effort transmis et couple résistant. Cette remarque concerne notamment l'application au domaine spatial.

Lorsque de très hautes performances sont requises, on utilise des mécanismes de vis à rouleaux dans lesquels la transmission du mouvement entre une vis sans fin et un écrou est assurée par des rouleaux satellites.

Comme l'illustre notamment le document FR-A-2 182 505, ainsi que la figure 1 annexée, on connait des mécanismes de vis à rouleaux perfectionnés dans lesquels une rotation de la vis sans fin 1 commande la translation simultanée de deux demi-écrous 2 et 3. La transformation du mouvement de rotation de la vis 1 en un mouvement de translation linéaire des demi-écrous est assurée par des gorges annulaires formées sur les rouleaux 4 et dans lesquelles sont en prise les filets formés respectivement sur la vis 1 et dans les demi-écrous 2 et 3.

Cet agencement a pour avantage de permettre l'application entre les deux demi-écrous d'une précharge axiale évitant normalement la création d'un jeu à l'intérieur du mécanisme. On obtient ainsi un mécanisme permettant de commander avec une très grande précision le déplacement de l'organe mené. De plus, l'application d'une précharge axiale dépassant un certain seuil peut garantir une irréversibilité complète du mécanisme, lorsque l'application concernée l'exige.

Dans la pratique, une précharge en compression est habituellement appliquée entre les deux demi-écrous du mécanisme de vis à rouleaux tel que décrit dans le document FR-A-2 182 505 au moyen d'un empilement de rondelles élastiques 5 (figure 1) placées autour de la vis 1 entre l'un 3 des demi-écrous et une surface d'appui d'un boîtier 6 encerclant les deux demi-écrous et prenant appui par ailleurs sur l'autre demi-écrou 2, de façon à solliciter ces demi-écrous l'un vers l'autre. Chacun des demi-écrous 2 et 3 est alors lié en rotation au boîtier 6, tout en étant libre de se déplacer axialement par rapport à ce dernier.

Dans le document FR-A-1 477 775 (sur lequel se fonde le préambule de la revendication 1), il est également décrit un mécanisme de vis à rouleaux comprenant deux demi-écrous liés en rotation à un boîtier extérieur, tout en étant libres en translation dans ce boîtier. Dans ce cas, on évite normalement la création d'un jeu à l'intérieur du mécanisme au moyen d'un ressort en forme de serpentin, comprimé dans un logement fraisé obliquement à cheval sur la périphérie des deux demi-écrous, de façon à commander automatiquement une rotation relative entre ces derniers.

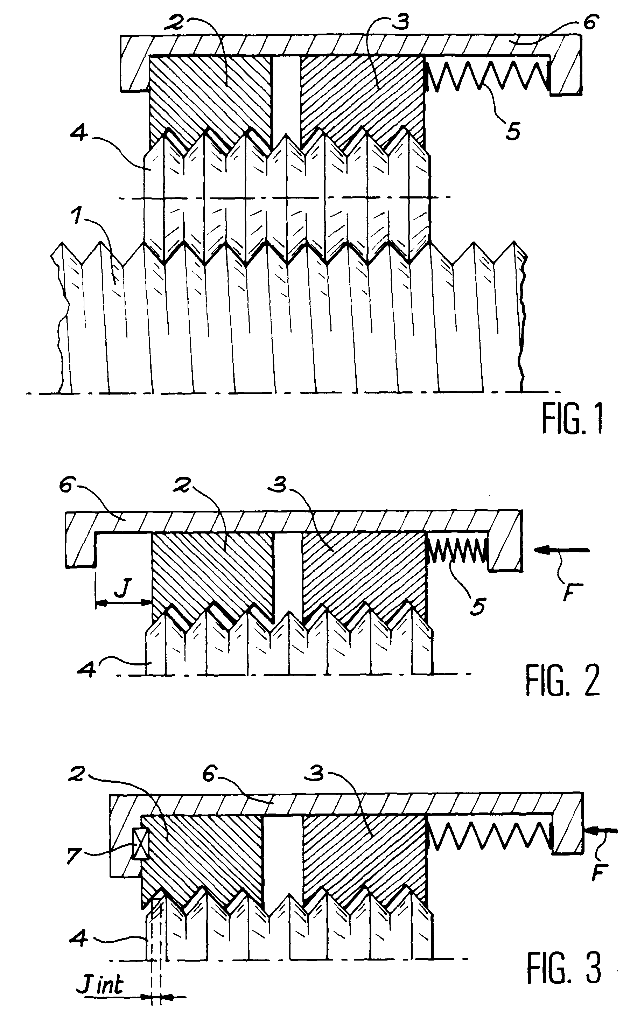

Ces agencements sont généralement satisfaisants dans un grand nombre d'applications. Cependant, ils deviennent pratiquement inutilisables lorsque le mécanisme est soumis à des vibrations induisant un grand nombre d'efforts axiaux consécutifs F alternés entre le boîtier et la vis, à un niveau excédant la précontrainte emmagasinée dans l'empilement de rondelles élastiques ou dans le ressort. Comme l'illustre schématiquement la figure 2, cette situation, qui se présente notamment lors du lancement des engins spatiaux, a en effet pour conséquences des déplacements axiaux relatifs importants J entre le boîtier 6 et les demi-écrous 2 et 3, conduisant à soumettre ces derniers à une succession de chocs sévères, lors de l'inversion des efforts axiaux F. Ces chocs endommagent rapidement les flancs des filets et rendent pratiquement le mécanisme incapable d'assumer les tâches de grande précision qui lui sont habituellement confiées.

Il est à noter que ce problème ne peut pas être résolu simplement en augmentant la valeur de la précharge appliquée initialement sur le mécanisme. En effet, une telle augmentation aurait pour conséquence d'augmenter la valeur du couple de rotation qu'il serait nécessaire d'exercer sur la vis pour commander une translation du boîtier. Elle conduirait donc dans tous les cas à l'utilisation de moteurs rotatifs présentant une puissance disproportionnée par rapport à la taille du mécanisme. Dans le cas où de tels mécanismes sont utilisés sur des engins spatiaux, l'augmentation de taille des moteurs rotatifs qui en résulterait rendrait cette solution inacceptable.

Par ailleurs, l'utilisation dans le vide du mécanisme de vis à rouleaux décrit dans le document FR-A-2 182 505 par exemple lors de son application dans le domaine spatial, est pratiquement impossible, du fait du grippage qui se produirait entre les pièces métalliques appelées à frotter les unes contre les autres. Ainsi, les différentes rondelles élastiques de l'empilement de rondelles risqueraient de se souder les unes sur les autres du fait de leur frottement induit par les vibrations auxquelles serait soumis le mécanisme lors du lancement de l'engin portant ce mécanisme. Cela est évidemment inacceptable, car il pourrait en résulter une disparition partielle ou totale de la précontrainte appliquée sur les deux demi-écrous, ce qui aurait pour conséquence la réapparition du jeu fonctionnel à l'intérieur du mécanisme et la disparition de son caractère irréversible.

Le fonctionnement sous vide du mécanisme de vis à rouleaux décrit précédemment peut aussi entraîner un risque de soudage des rouleaux sur la vis et sur les demi-écrous, étant donné que toutes ces pièces en contact de roulement sont habituellement métalliques.

Il est à noter qu'aucun de ces problèmes posés par l'utilisation des mécanismes de vis à rouleaux dans le domaine spatial n'est abordé dans les mécanismes de vis à billes, de sorte qu'aucune solution à ces problèmes ne peut être trouvée dans ces mécanismes.

L'invention a principalement pour objet un mécanisme canisme de vis à rouleaux réalisé selon le même principe que le mécanisme décrit dans le document FR-A-2 182 505, mais présentant des caractéristiques originales lui permettant de supporter des vibrations importantes et de fonctionner sous vide, ce qui facilite notamment l'application de ce mécanisme à l'industrie spatiale, tout en préservant les avantages (très grande précision et caractère totalement irréversible) présentés habituellement par ce mécanisme, sans qu'il soit nécessaire de lui appliquer un couple moteur excessif.

Conformément à l'invention, ce résultat est obtenu au moyen d'un mécanisme de vis à rouleaux dans lequel des rouleaux et une cage de guidage de ces rouleaux sont interposés entre une vis et deux demi-écrous annulaires, les deux demi-écrous étant montés dans un boîtier de précharge de telle sorte qu'un premier de ces demi-écrous soit solidaire du boîtier et que le deuxième demi-écrou soit lié au boîtier en rotation et libre en translation, caractérisé par le fait que des moyens élastiques de compression sont placés autour de la vis, entre le deuxième demi-écrou et une surface d'appui du boîtier située de l'autre côté du deuxième demi-écrou, par rapport au premier demi-écrou.

Dans ce mécanisme, et comme l'illustre schématiquement la figure 3, la solidarisation 7 de l'un 2 des demi-écrous 2 et 3 et du boîtier 6 permet d'éviter que, lorsque des efforts axiaux consécutifs F alternés excédant la précharge sont appliqués sur le mécanisme, du fait de vibrations, les demi-écrous ne subissent des chocs importants. En effet, l'application de l'effort axial F a alors pour effet d'induire dans le mécanisme un jeu Jint limité au jeu qui existe initialement entre les filets des rouleaux 4 et les filets du demi-écrou 2. Ce jeu Jint étant sensiblement plus faible que le jeu J induit dans les mécanismes de l'art antérieur, les chocs résultant de l'inversion du sens de l'effort F lors des vibrations sont minimisés. Par conséquent, si le mécanisme est soumis à des vibrations importantes, ces vibrations ne peuvent pas conduire à endommager les filets de la vis, des demi-écrous ou des rouleaux satellites.

Par ailleurs, l'utilisation d'un ressort hélicoïdal de compression comme moyens élastiques de compression pour appliquer la précharge évite tout risque de grippage du dispositif de précharge élastique lorsqu'il est utilisé dans le vide, ce qui assure le maintien d'une précharge pratiquement uniforme et garantit l'irréversibilité du mécanisme.

Avantageusement, lorsque la vis et chacun des demi-écrous sont métalliques, les rouleaux sont constitués, au moins dans leurs parties périphériques en contact avec la vis et les demi-écrous, de matériaux plastiques, pour éviter les risques de soudure au vide.

Selon une première forme de réalisation de l'invention, les rouleaux sont réalisés totalement en matière plastique.

Selon une deuxième forme de réalisation de l'invention, les rouleaux sont métalliques et revêtus, sur lesdites parties périphériques, de couches de matière plastique. Les parties des vis et des demi-écrous qui sont en contact avec les rouleaux sont alors avantageusement revêtues de couches d'argent. En fonctionnement, l'argent se mélange avec la matière plastique dont sont revêtus les rouleaux pour former un amalgame qui piège les particules créées par l'usure.

L'invention a aussi pour objet un actuateur linéaire utilisable dans l'espace, cet actuateur comprenant un organe moteur rotatif et un mécanisme de vis à rouleaux tel que défini précédemment.

On décrira à présent, à titre d'exemple non limitatif, une forme de réalisation préférentielle de l'invention, en se référant au dessin annexé, dans lequel :
- la figure 1, déjà décrite, illustre très schématiquement, un mécanisme de vis à rouleaux de l'art antérieur ;
- la figure 2, déjà décrite, illustre très schématiquement, le comportement du mécanisme de la figure 1, lorsqu'il est soumis à des efforts axiaux importants dus à des vibrations ;
- la figure 3, déjà décrite, représente très schématiquement un mécanisme de vis à rouleaux conforme à l'invention, lorsqu'il est soumis à des efforts axiaux importants dus à des vibrations ; et
- la figure 4 est une vue de côté, en coupe longitudinale partielle, représentant un actuateur linéaire équipé d'un mécanisme de vis à rouleaux conforme à l'invention.

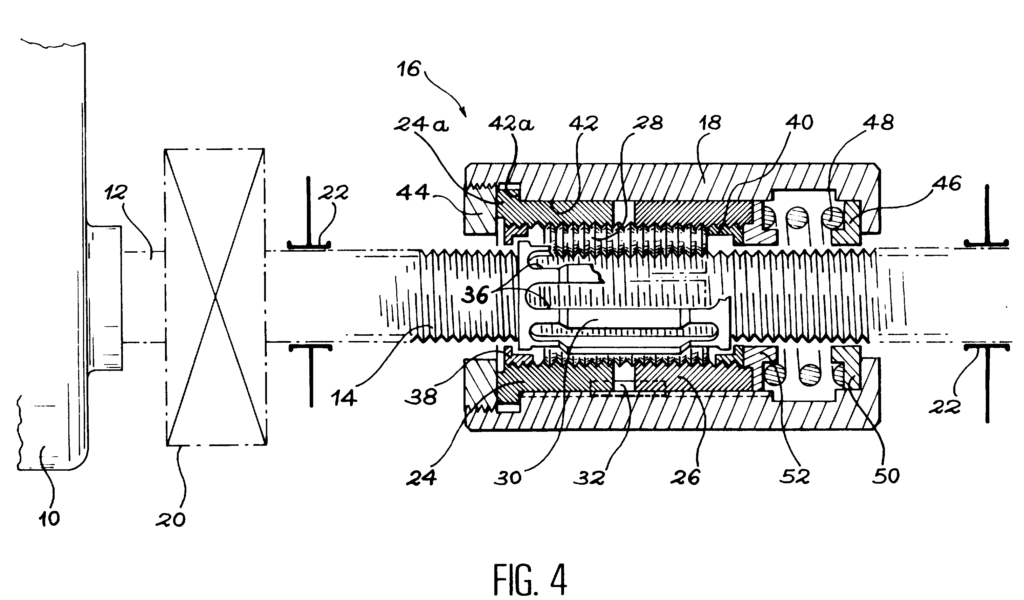

La figure 4 représente un actuateur linéaire destiné à être installé sur un engin spatial, afin de commander dans l'espace le déplacement linéaire d'un organe quelconque avec une très grande précision (de l'ordre du µm) et d'une manière totalement reproductible.

Cet actuateur linéaire comprend un moteur rotatif 10, de type connu, tel qu'un moteur couple ou un moteur pas à pas. L'arbre de sortie 12 de ce moteur 10 est solidarisé en rotation d'une vis sans fin 14 dont le mouvement de rotation est transformé en un mouvement de translation linéaire, parallèlement à l'axe de la vis 14, par un mécanisme de vis à rouleaux désigné de façon générale par la référence 16. Le mouvement de translation linéaire ainsi obtenu est recueilli sur un boîtier de précharge 18 du mécanisme de vis à rouleaux 16. Le boîtier de précharge 18 est solidarisé de l'organe dont on désire commander la translation linéaire d'une manière qui dépend de l'application considérée et ne fait pas partie de l'invention.

Dans la forme de réalisation illustrée sur la figure 4, le moteur 10 et le mécanisme de vis à rouleaux 16 sont supportés indépendamment l'un de l'autre par des éléments différents de la structure de l'engin spatial, de telle sorte que l'arbre de sortie 12 du moteur 10 agit sur la vis sans fin 14 du mécanisme de vis à rouleaux 16 au travers d'une transmission 20 de type cardan ou soufflet. La vis sans fin 14 est alors supportée, à chacune de ses extrémités dépourvues de filetage, par des paliers illustrés schématiquement en 22.

Il est à noter que d'autres agencements peuvent être envisagés dans certaines applications. Ainsi, l'arbre de sortie 12 du moteur 10 peut être directement solidaire de la vis sans fin 14 du mécanisme de vis à rouleaux 16 lorsque le moteur 10 et le mécanisme 16 sont supportés par le même élément de structure de l'engin spatial.

On décrira à présent en détail le mécanisme de vis à rouleaux 16, dans sa forme de réalisation préférentielle illustrée sur la figure 4.

En plus de la vis sans fin 14 et du boîtier de précharge 18, le mécanisme de vis à rouleaux 16 comprend deux demi-écrous 24 et 26 montés côte à côte à l'intérieur du boîtier de précharge 18, des rouleaux satellites 28 interposés entre la vis sans fin 14 et les demi-écrous 24 et 26, et une cage séparatrice 30 servant à maintenir l'écartement les rouleaux 28. La vis sans fin 14, le boîtier de précharge 18, les deux demi-écrous 24 et 26 et la cage séparatrice 30 sont disposés coaxialement.

De façon plus précise, la surface extérieure des rouleaux satellites 28 est pourvue de gorges régulièrement espacées selon un pas égal au pas des filets de la vis sans fin 14 et des demi-écrous 24 et 26. De plus, ces rouleaux 28 sont placés entre la vis et les demi-écrous de telle sorte que chaque rouleau soit simultanément en prise sur les filets de la vis 14 suivant sa génératrice la plus proche de l'axe de cette vis et sur les filets du demi-écrou 24 et du demi-écrou 26 suivant sa génératrice la plus éloignée de l'axe de la vis sans fin 14. Chacun des demi-écrous 24 et 26 est immobilisé en rotation dans le boîtier de précharge 18, par exemple par une clavette 32, de telle sorte que toute rotation des demi-écrous 24 et 26 soit rendue impossible du fait que le boîtier de précharge 18 est lui-même immobilisé en rotation.

Compte tenu de cet agencement, en lui-même classique, le mouvement de rotation de la vis sans fin 14 commandé par le moteur 10 est transformé par les rouleaux 28 en un mouvement de translation des demi-écrous 24 et 26 et, par conséquent, du boîtier de précharge 18.

La cage séparatrice 30 est une pièce de forme généralement tubulaire, munie sur toute sa circonférence de fenêtres 36 régulièrement espacées et qui s'étendent parallèlement à son axe de façon à recevoir chacun des rouleaux 28. Elle assure ainsi le maintien de l'espacement circonférentiel entre ces rouleaux. La cage séparatrice 30 est placée entre la vis sans fin 14 et l'ensemble formé par les deux demi-écrous 24 et 26 placés côte à côte, et elle est supportée à chacune de ses extrémités par des bagues 38 et 40 qui sont montées respectivement dans le demi-écrou 24 et dans le demi-écrou 26.

Selon une disposition connue, le mécanisme de vis à rouleaux 16 est muni de moyens permettant de ramener, à chaque tour de la vis sans fin 14, les rouleaux 28 dans une position centrale axialement symétrique par rapport aux deux demi-écrous 24 et 26. Ces moyens, non illustrés sur la figure 4, sont habituellement constitués par un évidement formé à l'intérieur des deux demi-écrous 24 et 26, sur une longueur axiale excédent la longueur d'un rouleau 28, et par des surfaces de came formées sur chacune des bagues 38 et 40 dans la région angulaire correspondant à cet évidement.

A chaque fois que la rotation de la vis sans fin 14 amène l'un des rouleaux 28 en face de cet évidement, les surfaces de came formées sur les bagues 38 et 40 tendent à ramener ce rouleau en arrière par rapport au sens de son déplacement axial à l'intérieur des demi-écrous 24 et 26, provoqué normalement par la rotation de la vis sans fin. Etant donné que le rouleau 28 se trouve alors en face de l'évidement précité, l'effort exercé axialement sur le rouleau par les surfaces de came châsse le rouleau radialement vers l'extérieur, jusqu'à ce qu'il ne soit plus en prise avec le filetage de la vis sans fin 14. Le rouleau 28 recule ainsi d'un pas par rapport aux filetages des demi-écrous 24 et 26, sous l'action des surfaces de came formées sur les bagues 38 et 40. A chaque fois qu'un rouleau 28 parcourt un tour complet à l'intérieur des demi-écrous 24 et 26, il est ainsi ramené en arrière d'un pas du filetage de ces demi-écrous. L'effet de déplacement axial des rouleaux 28 dans les demi-écrous, induit par la coopération du filetage de ces demis-écrous avec les gorges annulaires formées sur les rouleaux 28, est ainsi annulé puisque les rouleaux 28 sont recentrés automatiquement dans les demi-écrous 24 et 26 lors du fonctionnement du mécanisme.

Le boîtier de précharge 18 délimite intérieurement un alésage 42 dans lequel peut coulisser le demi-écrou 26 qui constitue ainsi un demi-écrou libre en translation.

Le demi-écrou 24 est également logé dans l'alésage 42 du boîtier de précharge 18, mais il est immobilisé dans ce dernier par un écrou de blocage 44 vissé dans un taraudage formé à l'une des extrémités ouvertes de l'alésage 42 adjacente au demi-écrou 24. Cet écrou de blocage 44 prend appui sur une collerette 24a formée sur le demi-écrou 24, de façon à bloquer cette collerette contre un épaulement 42a de l'alésage 42. Le demi-écrou 24, par ailleurs immobilisé en rotation par la clavette 32, constitue ainsi un demi-écrou bloqué.

A son extrémité opposée à l'écrou de blocage 44, le boîtier de précharge 18 comporte un fond traversé librement par la vis sans fin 14 et dont la face tournée vers le demi-écrou libre 26 définit une surface d'appui 46.

Entre cette surface d'appui 46 et la face en vis-à-vis du demi-écrou 26 est interposé un ressort hélicoïdal de compression 48 permettant d'appliquer entre les demi-écrous 24 et 26 une précontrainte axiale déterminée, évitant la création d'un jeu dans le mécanisme de vis à rouleaux 16 et rendant ce mécanisme irréversible.

Afin d'assurer le centrage du ressort hélicoïdal de compression 48 sur l'axe de la vis sans fin 14, des coupelles de centrage 50 et 52 sont interposées respectivement entre le ressort 48 et la surface d'appui 46 et entre le ressort 48 et la face en vis-à-vis du demi-écrou libre 26.

Du fait du blocage du demi-écrou 24 dans le boîtier de précharge 18 et de l'application de la précharge au moyen du ressort hélicoïdal de compression 48, le mécanisme de vis à rouleaux 16 conforme à l'invention satisfait aux exigences de très grande précision et de répétabilité requises dans de nombreux cas dans le domaine spatial, sans que ces performances ne soient amoindries en aucune manière par les vibrations subies par tout engin spatial lors de son lancement et sans que le fonctionnement du mécanisme dans l'espace ne risque d'être interrompu par un grippage dû au soudage sous vide de pièces en contact de frottement.

En effet, du fait que le demi-écrou 24 est solidaire du boîtier de précharge 18, les vibrations subies par le mécanisme lors du lancement de l'engin peuvent seulement entraîner de très légers mouvements axiaux Jint (figure 3) du demi-écrou libre 26 à l'intérieur du boîtier de précharge 18, dans la limite du jeu fonctionnel qui existe entre le filetage intérieur de ce demi-écrou 26 et les rouleaux 28 et entre les rouleaux 28 et le filetage de la vis sans fin 14. Ces déplacements très limités ne peuvent en aucun cas endommager le mécanisme de vis à rouleaux 16. De plus, ils n'entraînent pratiquement pas de variations de longueur du ressort hélicoïdal de compression 48, de telle sorte que la raideur de celui-ci reste inchangée et garantit lors du fonctionnement du mécanisme l'application de la précharge précise requise. Le caractère irréversible du mécanisme 16 est ainsi préservé en toute sécurité.

En outre, l'utilisation d'un ressort hélicoïdal de compression pour appliquer la précharge permet d'éviter tout risque de grippage susceptible de modifier cette précharge de façon permanente, comme cela serait le cas si on utilisait un empilement de rondelles élastiques comme c'est habituellement l'usage dans de tels mécanismes. Par rapport aux rondelles élastiques, un ressort hélicoïdal de compression a aussi pour avantage de garantir le maintien d'une raideur pratiquement constante lorsqu'il se produit une légère variation de la longueur du ressort, ce qui contribue là encore à garantir l'obtention d'une très grande précision.

Afin d'améliorer encore le comportement du mécanisme de vis à rouleaux 16 dans le vide, compte tenu du fait que la vis sans fin 14 ainsi que les demi-écrous 24 et 26 sont habituellement réalisés en un métal tel que de l'acier, on peut réaliser les rouleaux 28 totalement en une matière plastique telle que du polyamide, du polyimide chargé ou non de lubrifiant solide ou autres.

Dans une forme de réalisation préférentielle de l'invention, les rouleaux 28 sont également réalisés en acier, mais leur surface périphérique en contact avec la vis 14 et avec les demi-écrous 24 et 26 est revêtue d'un dépôt d'une matière plastique telle que du polytétrafluoréthylène. Dans ce cas, une couche d'argent est déposée sur les filets de la vis sans fin 14 et sur les filets des demi-écrous 24 et 26. Lors du fonctionnement du mécanisme de vis à rouleaux 16, cette couche d'argent forme un amalgame avec le polytétrafluoréthylène, ce qui évite la création de poussière susceptible de venir se déposer dans l'espace sur certains organes sensibles de l'engin spatial.

Quelle que soit la forme de réalisation utilisée, l'agencement qui vient d'être décrit permet d'être totalement certain que le roulement des rouleaux 28 sur les filets de la vis 14 et des demi-écrous 24 et 26 ne peut en aucun cas conduire à une soudure sous vide de ces pièces et donc à un grippage du mécanisme, lorsqu'il est appelé à fonctionner dans l'espace.

Afin de réduire autant que possible les frottements entre le boîtier 18 et le demi-écrou libre 26 ainsi qu'entre le demi-écrou libre 26 et les rouleaux 28, un lubrifiant solide tel que MoS₂ est déposé, par exemple par dépôt physique en phase vapeur (PVD) sur les surfaces en contact de ces pièces, selon une technologie utilisée couramment dans l'industrie spatiale.

Enfin, les bagues 38 et 40 qui comportent les surfaces de came assurant le recentrage des rouleaux 28 sont avantageusement réalisées en une matière plastique telle que du polyamide ou du polyimide.

Bien entendu, l'invention n'est pas limitée à la forme de réalisation qui vient d'être décrite à titre d'exemple. On observera notamment que le demi-écrou bloqué 24 peut être réalisé d'une seule pièce avec le boîtier de précharge 18. Par ailleurs, si la description qui précède fait apparaître clairement l'intérêt présenté par le mécanisme selon l'invention, lorsqu'il est utilisé sur un engin spatial, il est important d'observer que les avantages qu'il présente permettent de l'utiliser au sol, dans des applications impliquant la présence de vibrations élevées, notamment sous vide.

## Revendications

1. Mécanisme de vis à rouleaux dans lequel des rouleaux (28) et une cage de guidage (30) de ces rouleaux sont interposés entre une vis (14) et deux demi-écrous annulaires (24,26), les deux demi-écrous étant montés dans un boîtier de précharge (18) de telle sorte qu'un premier (24) de ces demi-écrous soit solidaire du boîtier et que le deuxième demi-écrou (26) soit lié au boîtier en rotation et libre en translation, caractérisé par le fait que des moyens élastiques de compression (48) sont placés autour de la vis (14), entre le deuxième demi-écrou (26) et une surface d'appui (46) du boîtier située de l'autre côté du deuxième demi-écrou, par rapport au premier demi-écrou (24).

2. Mécanisme de vis à rouleaux selon la revendication 1, caractérisé par le fait que la vis et les demi-écrous étant métalliques, les rouleaux (28) sont constitués, au moins dans leurs parties périphériques en contact avec la vis et les demi-écrous, de matériaux plastiques.

3. Mécanisme de vis à rouleaux selon la revendication 2, caractérisé par le fait que les rouleaux (28) sont réalisés totalement en matière plastique.

4. Mécanisme de vis à rouleaux selon la revendication 2, caractérisé par le fait que les rouleaux (28) sont métalliques et revêtus, sur lesdites parties périphériques, de couches de matière plastique.

5. Mécanisme de vis à rouleaux selon la revendication 4, dans lequel la vis (14) et les demi-écrous (24, 26) sont revêtus de couches d'argent qui forment un amalgame avec les couches de matière plastique des rouleaux (28).

6. Mécanisme de vis à rouleaux selon l'une quelconque des revendications précédentes, caractérisé par le fait que les moyens élastiques de compresssion comprennent un ressort hélicoïdal de compression (48).

7. Actuateur linéaire utilisable dans l'espace, comprenant un organe moteur rotatif (10) et un mécanisme de vis à rouleaux (16), caractérisé par le fait que ce mécanisme est réalisé conformément à l'une quelconque des revendications précédentes.

## Patentansprüche

1. Gewinderollenmechanismus, bei dem die Rollen (28) und ein Führungskäfig (30) dieser Rollen eingefügt sind zwischen eine Schraube (14) und zwei ringförmige Halbmuttern (24,26), wobei die beiden Halbmuttern derart in ein Vorspannungsgehäuse (18) montiert sind, daß eine erste (24) dieser Halbmuttern mit dem Gehäuse fest verbunden ist und die zweite Halbmutter (26) mit dem Gehäuse drehfest aber parallelverschiebbar verbunden ist,
**dadurch gekennzeichnet**, daß elastische Druckeinrichtungen (48) um die Schraube (14) herum angebracht sind, zwischen der zweiten Halbmutter (26) und einer Auflagefläche (46) des Gehäuses, die sich, bezogen auf die erste Halbmutter (24), auf der abgewandten Seite der zweiten Halbmutter (26) befindet.

2. Gewinderollenmechanismus nach Anspruch 1, dadurch gekennzeichnet, daß, wobei die Schraube und die Halbmuttern metallisch sind, die Rollen (28) wenigstens in ihren peripheren Teilen, die in Kontakt sind mit der Schraube und den Halbmuttern, durch Kunststoffmaterialien gebildet werden.

3. Gewinderollenmechanismus nach Anspruch 2, dadurch gekennzeichnet, daß die Rollen (28) ganz aus Kunststoff hergestellt sind.

4. Gewinderollenmechanismus nach Anspruch 2, dadurch gekennzeichnet, daß die Rollen (28) metallisch sind und, auf besagten peripheren Teilen, mit Kunststoffschichten überzogen sind.

5. Gewinderollenmechanismus nach Anspruch 4, bei dem die Schraube (14) und die Halbmuttern (24,26) mit Silberschichten überzogen sind, die mit den Kunststoffschichten der Rollen (28) ein Amalgam bilden.

6. Gewinderollenmechanismus nach einem der vorangehenden Ansprüche, dadurch gekennzeichnet, daß die elastischen Druckeinrichtungen eine zylindrische Schraubendruckfeder (48) umfassen.

7. Linearbetätigungsvorrichtung, verwendbar im Weltraum, ein Drehantriebsorgan (10) und einen Gewinderollenmechanismus (16) umfassend, dadurch gekennzeichnet, daß dieser Mechanismus nach einem der vorangehenden Ansprüche hergestellt wird.

## Claims

1. Roller screw mechanism in which the rollers (28) and a guide cage (30) for said rollers are interposed between a screw (14) and two annular half-nuts (24, 26), the two half-nuts being installed in a preload box (18), in such a way that a first (24) of the said half-nuts (26) is integral with the box and that the second half-nut is linked with the box in rotation and free in translation, characterized in that elastic compression means (48) are placed around the screw (14), between the second half-nut (26) and a bearing surface (46) of the box located on the other side of the second half-nut with respect to the first half-nut (24).

2. Roller screw mechanism according to claim 1, characterized in that the screw and the half-nuts are made from metal, so that at least the peripheral portions of the rollers (28) in contact with the screw and the half-nuts are made from plastic.

3. Roller screw mechanism according to claim 2, characterized in that the rollers are made entirely from plastic.

4. Roller screw mechanism according to claim 2, characterized in that the rollers (28) are made from metal and their peripheral portions are coated with plastic material layers.

5. Roller screw mechanism according to claim 4, characterized in that the screw (14) and the half-nuts (24, 26) are coated with silver coatings, which form an amalgam with the plastic material layers of the rollers (28).

6. Roller screw mechanism according to any one of the preceding claims, characterized in that the elastic compression means comprise a helical compression spring (48).

7. Linear actuator usable in space, incorporating a rotary motor member (10) and a roller screw mechanism (16), characterized in that the mechanism is constituted according to any one of the preceding claims.
